# EUROPEAN PATENT APPLICATION

(11) **EP 3 933 518 A1**
(43) Date of publication of application: **05.01.2022**
(21) Application number: 20183107.0
(22) Date of filing: 30.06.2020
(51) Int. Cl.: G05B 19/042, G05B 23/02, H04L 29/08, H04W 88/16

(54) **A COMMUNICATION SYSTEM AND METHOD FOR INDUSTRIAL AUTOMATION**

(71) Applicant: ABB Schweiz AG, 5400 Baden (CH)
(72) Inventor: Karhinen, Pasi, 00380 Helsinki (FI); Kauhanen, Matti, 00380 Helsinki (FI)
(74) Representative: Kolster Oy Ab

(57) **Abstract**

Disclosed is a method for transmitting sensor measurements from a sensor device to an industrial automation device via a first wireless connection, a wired connection, and a second wireless connection. The sensor device measures operational information associated with an industrial asset, and transmits the operational information to a first gateway device via the first wireless connection. The first gateway device receives the operational information via the first wireless connection, and transmits the operational information to a second gateway device via the wired connection. The second gateway device receives the operational information via the wired connection, and transmits the operational information to the industrial automation device via the second wireless connection. The industrial automation device receives the operational information via the second wireless connection.

## Description

### FIELD

Various exemplary embodiments relate to a communication system, and particularly to a communication system for industrial automation.

### BACKGROUND

In an industrial plant, an industrial automation device, for example a variable speed drive, may be located far away from an industrial asset, for example a motor that the industrial automation device is controlling. A data connection between the industrial automation device and the industrial asset may be required in order to transmit sensor measurements from the industrial asset to the industrial automation device. It is desirable to improve the reliability of data connectivity between an industrial automation device and an industrial asset that are located far away from each other in an industrial plant.

### SUMMARY

The scope of protection sought for various exemplary embodiments is set out by the independent claims. The exemplary embodiments and features, if any, described in this specification that do not fall under the scope of the independent claims are to be interpreted as examples useful for understanding various exemplary embodiments.

According to an aspect, there is provided a method comprising measuring, by a sensor device, operational information associated with an industrial asset; transmitting, by the sensor device, the operational information to a first gateway device via a first wireless connection; receiving, by the first gateway device, the operational information via the first wireless connection; transmitting, by the first gateway device, the operational information to a second gateway device via a wired connection; receiving, by the second gateway device, the operational information via the wired connection; transmitting, by the second gateway device, the operational information to an industrial automation device via a second wireless connection; and receiving, by the industrial automation device, the operational information via the second wireless connection.

According to another aspect, there is provided equipment comprising means for implementing the aforementioned method.

According to another aspect, there is provided a computer program comprising instructions for causing an apparatus to carry out the aforementioned method.

According to another aspect, there is provided a computer readable medium comprising program instructions for causing an apparatus to carry out the aforementioned method.

According to another aspect, there is provided a non-transitory computer readable medium comprising program instructions for causing an apparatus to carry out the aforementioned method.

According to another aspect, there is provided a system configured to perform the aforementioned method.

### BRIEF DESCRIPTION OF THE DRAWINGS

In the following, various exemplary embodiments will be described in greater detail with reference to the accompanying drawings, in which:
FIG. 1 illustrates a simplified architecture of a system;
FIG. 2 illustrates a signalling diagram according to an exemplary embodiment;
FIGS. 3 to 6 illustrate flow charts according to exemplary embodiments;
FIGS. 7 and 8 illustrate apparatuses according to exemplary embodiments.

### DETAILED DESCRIPTION

The following embodiments are exemplary. Although the specification may refer to "an", "one", or "some" embodiment(s) in several locations of the text, this does not necessarily mean that each such reference is made to the same embodiment(s), or that a particular feature only applies to a single embodiment. Single features of different embodiments may also be combined to provide other embodiments.

Various exemplary embodiments may be applicable to any process in an industrial plant, including a processing system and/or an industrial manufacturing related process and/or a system for a technical process, which is at least partly automated, providing different measured/sensored values for a plurality of variables on one or more devices (equipment) and/or on one or more processes. A non-limiting list of examples includes power plants, pulp and paper plants, manufacturing plants, chemical processing plants, power transmission systems, mining and mineral processing plants, oil and gas systems, data centers, ships, and transportation fleet systems.

Different embodiments and examples are described below using single units, models, equipment and memory, without restricting the embodiments/examples to such a solution. Concepts called cloud computing and/or virtualization may be used. Virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In cloud computing network devices, computing devices and/or storage devices provide shared resources. Some other technology advancements, such as Software-Defined Networking (SDN) may cause one or more of the functionalities described below to be migrated to any corresponding abstraction or apparatus or device. Therefore, all words and expressions should be interpreted broadly, and they are intended to illustrate, not to restrict, the exemplary embodiments.

In an industrial plant, an industrial automation device, for example a variable speed drive, may be located far away from an industrial asset, for example a motor that the industrial automation device is controlling. For example, the industrial automation device and the industrial asset may be located over 100 meters or even over 500 meters away from each other. A data connection between the industrial automation device and the industrial asset may be required in order to transmit sensor measurements from the industrial asset to the industrial automation device. However, due to the limited range of wireless communications such as Bluetooth or Wi-Fi, a wireless data connection between the industrial automation device and the industrial asset may not be reliable. Furthermore, a wireless signal may experience attenuation caused by, for example, concrete and/or other structural elements between the industrial automation device and the industrial asset. On the other hand, a separate wired data connection between the industrial automation device and the industrial asset may be impractical, as it may require hundreds of meters or more of additional cabling. In order to address this challenge, some exemplary embodiments provide a data connection between an industrial automation device and a sensor device by using both wireless connectivity and an existing cable, for example a power cable or a PtlOO cable, between the industrial automation device and the industrial asset.

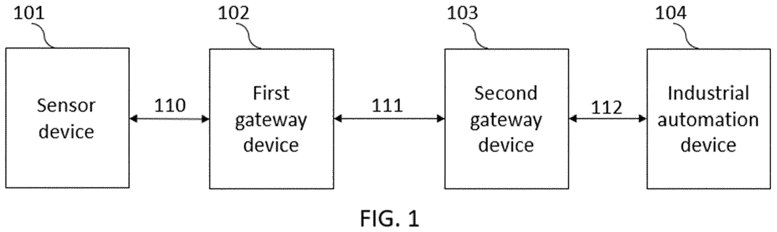

FIG. 1 illustrates a system according to an exemplary embodiment. It should be noted that FIG. 1 illustrates a simplified system architecture only showing some elements and functional entities, all being logical units whose implementation may differ from what is shown. The connections shown in FIG. 1 are logical connections; the actual physical connections may be different. It is apparent to a person skilled in the art that the systems also comprise other functions and structures. It should be appreciated that the functions, structures, elements, and protocols used in or for communication are irrelevant to the exemplary embodiments. Therefore, they need not be discussed in more detail here.

The system comprises one or more sensor devices 101. The sensor device 101, for example a smart sensor or an intelligent sensor, may be a condition monitoring sensor that may be attached to, or comprised in, an industrial asset, i.e. machinery. The industrial asset may comprise for example a motor, such as an induction motor, a pump, such as an electric pump, a fan, a compressor, an extruder, and/or a mounted bearing. The sensor device 101 may be configured to measure operational information, for example observed technical performance information such as measured values for temperature and/or vibration associated with the industrial asset. The sensor device 101 may measure, for example, operational information associated with the motor, fan, compressor, extruder, or mounted bearing comprised in the industrial asset. The sensor device 101 may be configured to store the measured operational information for example in an internal memory of the sensor device 101. The sensor device 101 may be able to connect to the internet for example via a cellular or wireless link, and the sensor device may be further configured to store the operational information for example to a cloud server. The sensor device 101 may be equipped with a short-range radio interface, for example Bluetooth, Wi-Fi, or a wireless mesh protocol. The sensor device 101 may be further configured to exchange information, i.e. to transmit and/or receive data, with a first gateway device 102 via a first wireless connection 110, for example a Bluetooth or Wi-Fi connection. For example, the sensor device 101 may be configured transmit the measured operational information to the first gateway device 102 via the first wireless connection 110. The sensor device 101 may be further configured to analyze the operational information, for example to detect and/or predict a fault associated with the industrial asset, and to transmit a warning if a fault is detected or predicted. For example, a fault may be detected if a measured value, such as temperature, associated with the industrial asset exceeds a predetermined threshold value.

The first gateway device 102 may comprise for example a Bluetooth gateway, an access point, a server computer or a terminal device, such as a smartphone, a desktop computer, a laptop computer or a tablet computer. The first gateway device 102 may be attached to the industrial asset, or located at a close proximity to the sensor device 101, for example less than 10 meters away from the sensor device 101, depending on the range of the wireless technology used by the gateway. For example, the first gateway device 102 may be comprised in a junction box or a terminal box of the industrial asset comprising cabling connections for the industrial asset. The first gateway device 102 may be configured to exchange information, i.e. to transmit and/or receive data, with the sensor device 101 via the first wireless connection 110. For example, the first gateway device 102 may be configured to receive the operational information and/or warning(s) from the sensor device 101 via the first wireless connection 110. The first gateway device 102 may be further configured to store the operational information received from the sensor device 101 for example in an internal memory of the first gateway device 102. The first gateway device 102 may be able to connect to the internet for example via a cellular, wireless or wired link, and the first gateway device 102 may be further configured to store the operational information for example to a cloud server. The first gateway device 102 may be connected to a second gateway device 103 via a wired connection 111. The wired connection 111 may comprise for example a power cable or a PtlOO cable. A PtlOO cable is a type of sensor cable that may exist between the industrial automation device and the industrial asset. However, the sensor device 101 may not comprise means for connecting directly to the PtlOO cable or to the power cable. The power cable, for example a three-phase symmetric power cable, may be used to provide power from an industrial automation device 104 to the industrial asset. Power line communication may be used to transfer information via the power cable. The power cable may also be used to provide power to the first gateway device 102 and the second gateway device 103. The first gateway device 102 may be configured to exchange information, i.e. to transmit and/or receive data, with the second gateway device 103 via the wired connection 111. For example, the first gateway device 102 may be configured to transmit the operational information and/or warning(s) to the second gateway device 103 via the wired connection 111.

The second gateway device 103 may be configured to exchange information, i.e. to transmit and/or receive data, with the first gateway device 102 via the wired connection 111. For example, the second gateway device 103 may be configured to receive the operational information and/or warning(s) from the first gateway device 102. The second gateway device 103 may be attached to, or comprised in, the industrial automation device 104, or located at a close proximity to the industrial automation device 104, for example less than 10 meters away from the industrial automation device 104, depending on the range of the wireless technology used by the gateway. The second gateway device 103 may be configured to exchange information, i.e. to transmit and/or receive data, with the industrial automation device 104, for example a control panel of the industrial automation device 104, via a second wireless connection 112, for example a Bluetooth or Wi-Fi connection. For example, the second gateway device 103 may be configured to transmit the operational information and/or warning(s) to the industrial automation device 104 via the second wireless connection 112. The second gateway device 103 may comprise for example a Bluetooth gateway, an access point, a server computer or a terminal device, such as a smartphone, a desktop computer, a laptop computer or a tablet computer.

The industrial automation device 104 may comprise a frequency converter, variable frequency drive, variable speed drive, motion drive, motion controller, motor, servomotor, AC/DC module, DC/AC module, DC/DC module, programmable logic controller (PLC), switch, soft starter, robot, or any other device used for industrial automation. The industrial automation device 104, for example a variable speed drive, may be used to run machinery, which may also be referred to as an industrial asset, such as a motor, a pump, a fan or a compressor, at different speeds. The industrial automation device 104 may be located for example over 100 meters away from the industrial asset and from the sensor device 101. The industrial automation device 104 may comprise or be connected to a controller, for example a proportional-integral-derivative, PID, controller. The controller may be configured to send control signals to the industrial automation device 104. The industrial automation device 104 may control highly dynamic industrial processes, in which for example the speed or the torque applied to a motor has to be varied according to the needs of the industrial process.

The industrial automation device 104 may store, for example in an internal memory of the industrial automation device, information on control parameter settings, for example present values of parameters such as controller gains, ramp times, motor data, limits, magnetization settings, signal filtering settings, and/or motor control settings. The industrial automation device 104 may also store internal technical information recorded during the operation of the industrial automation device, for example information on key performance indicators, such as load current histogram, torque ripple, torque vs. speed curves, and/or power vs. speed curves, temperature, voltage, current, and/or other information such as resonance frequencies and/or load inertias. The industrial automation device 104 may be equipped with a short-range radio interface, for example Bluetooth, Wi-Fi or a wireless mesh protocol. The industrial automation device 104 may be configured to exchange information, i.e. to transmit and/or receive data, with the second gateway device 103 via the second wireless connection 112. For example, the industrial automation device 104 may be configured to receive the operational information and/or warning(s) from the second gateway device 103 via the second wireless connection 112. The industrial automation device 104 may be further configured to adjust or optimize one or more of the control parameter settings of the industrial automation device 104 based on the received operational information associated with the industrial asset in order to improve the efficiency and/or reliability of the industrial automation device and/or the industrial asset. The industrial automation device 104 may be further configured to stop the industrial asset, for example to cut power to the industrial asset, if a warning is received or if the received operational information indicates overheating by the measured temperature value exceeding a pre-defined threshold value, as an example. For example, the industrial automation device 104 may use model predictive control or a PID controller to adjust the one or more control parameter settings. The industrial automation device 104 may further be configured to transmit one or more commands to the sensor device 101 via the second gateway device 103 and the first gateway device 102.

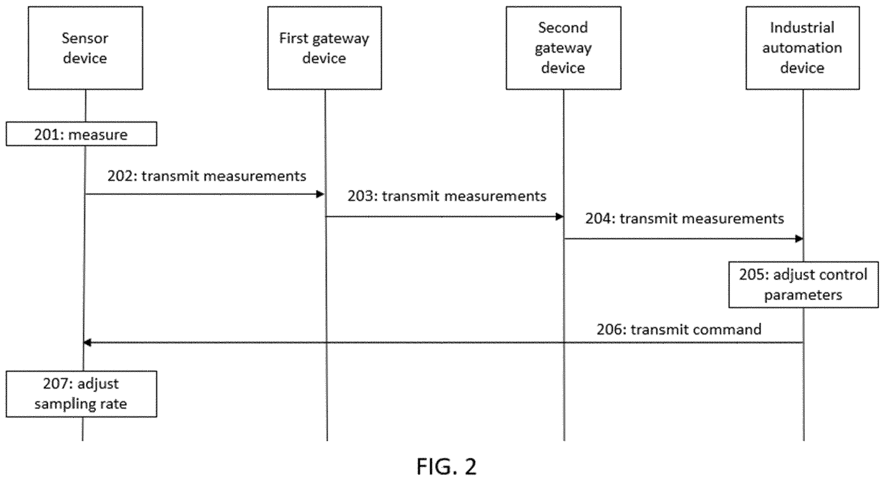

FIG. 2 is a signalling diagram illustrating information exchange according to an exemplary embodiment. Referring to FIG. 2, a sensor device, for example a smart sensor, measures 201 operational information associated with an industrial asset. The industrial asset may comprise for example a motor, such as an induction motor, a pump, such as an electric pump, a fan, a compressor, an extruder, and/or a mounted bearing. The operational information may comprise for example observed technical performance information such as one or more measured values for temperature and/or vibration associated with the industrial asset. The sensor device then transmits 202 the measured operational information to a first gateway device via a first wireless connection. The first gateway device then transmits 203, or forwards, the measured operational information to a second gateway device via a wired connection. The second gateway device then transmits 204, or forwards, the measured operational information to an industrial automation device via a second wireless connection. The industrial automation device may then adjust 205, or optimize, one or more control parameter settings of the industrial automation device based on the received operational information associated with the industrial asset in order to improve the efficiency and/or reliability of the industrial automation device and/or the industrial asset. The industrial automation device may, for example, cut power to the industrial asset, if the received operational information indicates overheating by the measured temperature value exceeding a pre-defined threshold value, as an example. Furthermore, the industrial automation device may transmit 206 one or more commands, or configuration parameter settings, to the sensor device via the second gateway and the first gateway. For example, the industrial automation device may instruct the sensor device to adjust a sampling rate, or time scale, for the measurements performed by the sensor device. The sensor device may then adjust 207 the sampling rate of the measurements based on the one or more commands received from the industrial automation device. For example, the sampling rate may be increased in order to increase the resolution of the measurements, or the sampling rate may be decreased in order to reduce power consumption and thus increase the battery life of the sensor device (if the sensor device comprises a battery).

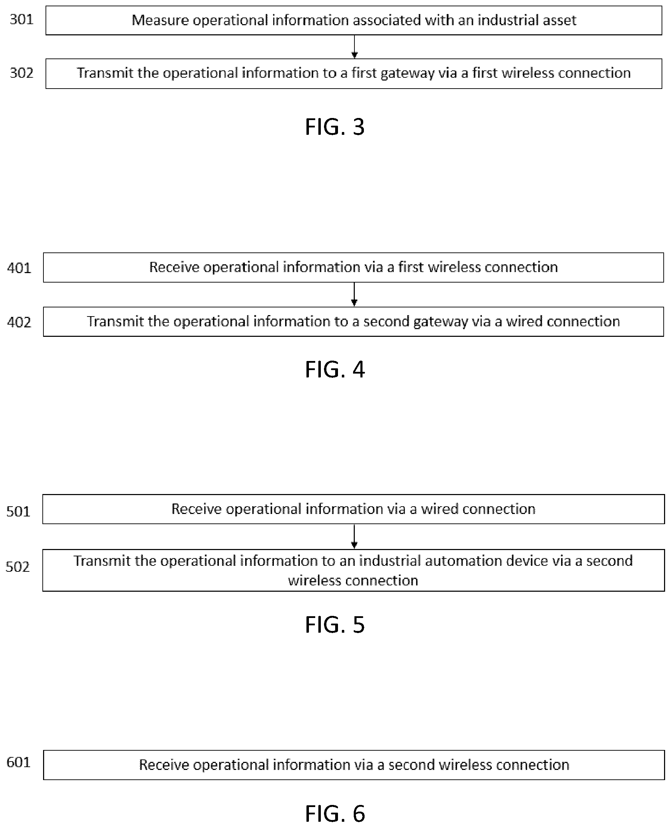

FIG. 3 illustrates a flow chart according to an exemplary embodiment. Referring to FIG. 3, a sensor device, for example a smart sensor, measures 301 operational information associated with an industrial asset, for example a motor, a pump, a mounted bearing, a fan or a compressor. The operational information may comprise for example observed technical performance information such as measured values for temperature and/or vibration associated with the industrial asset. The sensor device then transmits 302 the measured operational information to a first gateway device via a first wireless connection, for example a Bluetooth or Wi-Fi connection.

FIG. 4 illustrates a flow chart according to an exemplary embodiment. Referring to FIG. 4, the first gateway device receives 401 the operational information transmitted by the sensor device via the first wireless connection. The first gateway device then transmits 402 the operational information to a second gateway device via a wired connection, for example a power cable or a PtlOO cable.

FIG. 5 illustrates a flow chart according to an exemplary embodiment. Referring to FIG. 5, the second gateway device receives 501 the operational information transmitted by the first gateway device via the wired connection. The second gateway device then transmits 502 the operational information to an industrial automation device, for example a variable speed drive, via a second wireless connection, for example a Bluetooth or Wi-Fi connection.

FIG. 6 illustrates a flow chart according to an exemplary embodiment. Referring to FIG. 6, the industrial automation device receives 601 the operational information transmitted by the second gateway device via the second wireless connection.

A technical advantage provided by some exemplary embodiments may be that using a combination of two wireless connections together with a wired connection may improve the range, data transfer rate, and/or reliability of connectivity between devices that are located far away from each other, for example in comparison to using only one Bluetooth or Wi-Fi connection between the devices, which may not have other means of connectivity with each other. In addition, the amount of physical cabling needed between the devices may be reduced for example in comparison to using a separate data cable, such as an ethernet cable, between the devices.

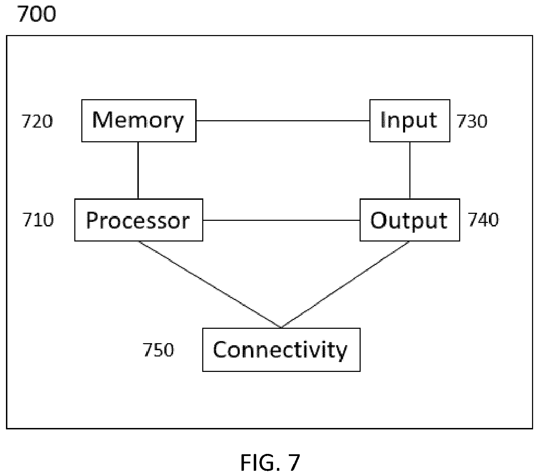

FIG. 7 illustrates an apparatus 700, which may be an apparatus such as, or comprised in, a sensor device according to an exemplary embodiment. The apparatus 700 comprises a processor 710. The processor 710 interprets computer program instructions and processes data. The processor 710 may comprise one or more programmable processors. The processor 710 may comprise programmable hardware with embedded firmware and may, alternatively or additionally, comprise one or more application specific integrated circuits, ASICs.

The processor 710 is coupled to a memory 720. The processor is configured to read and write data to and from the memory 720. The memory 720 may comprise one or more memory units. The memory units may be volatile or non-volatile. It is to be noted that in some exemplary embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 720 stores computer readable instructions that are executed by the processor 710. For example, non-volatile memory stores the computer readable instructions and the processor 710 executes the instructions using volatile memory for temporary storage of data and/or instructions.

The computer readable instructions may have been pre-stored to the memory 720 or, alternatively or additionally, they may be received, by the apparatus, via electromagnetic carrier signal and/or may be copied from a physical entity such as computer program product. Execution of the computer readable instructions causes the apparatus 700 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 700 further comprises, or is connected to, an input unit 730. The input unit 730 comprises one or more interfaces for receiving input. The one or more interfaces may comprise for example one or more motion and/or orientation sensors, one or more vibration sensors, one or more temperature sensors, one or more cameras, one or more accelerometers, one or more microphones, one or more buttons and one or more touch detection units. Further, the input unit 730 may comprise an interface to which external devices may connect to.

The apparatus 700 may also comprise an output unit 740. The output unit may comprise or be connected to one or more displays capable of rendering visual content such as a light emitting diode, LED, display, a liquid crystal display, LCD or a liquid crystal on silicon, LCoS, display. The output unit 740 may further comprise one or more audio outputs. The one or more audio outputs may be for example loudspeakers.

The apparatus 700 may further comprise a connectivity unit 750. The connectivity unit 750 enables wireless connectivity to external networks and/or devices. The connectivity unit 750 may comprise one or more antennas and one or more receivers that may be integrated to the apparatus 700 or the apparatus 700 may be connected to. The connectivity unit 750 may comprise an integrated circuit or a set of integrated circuits that provide the wireless communication capability for the apparatus 700. Alternatively, the wireless connectivity may be a hardwired application specific integrated circuit, ASIC.

It is to be noted that the apparatus 700 may further comprise various components not illustrated in FIG. 7. The various components may be hardware components and/or software components.

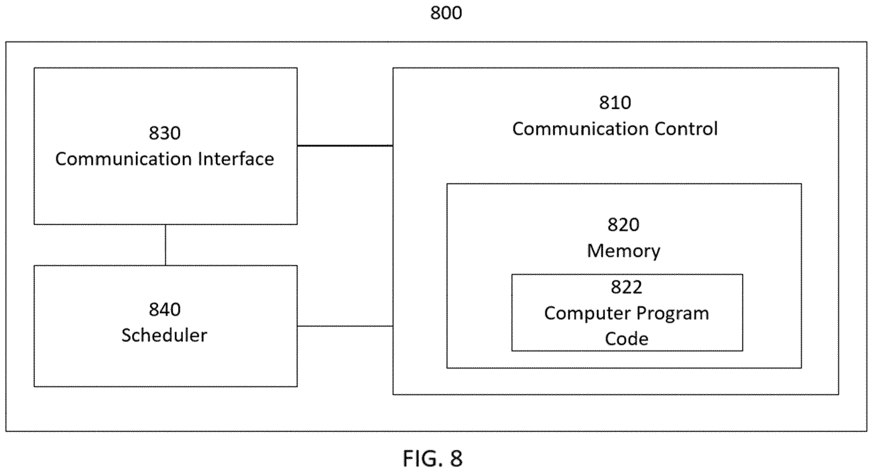

The apparatus 800 of FIG. 8 illustrates an exemplary embodiment of an apparatus that may comprise, or be comprised in, a gateway device or an industrial automation device. The apparatus may be, for example, a circuitry or a chipset applicable for realizing the described exemplary embodiments. The apparatus 800 may be an electronic device comprising one or more electronic circuitries. The apparatus 800 may comprise a communication control circuitry 810 such as at least one processor, and at least one memory 820 including a computer program code (software) 822 wherein the at least one memory and the computer program code (software) 822 are configured, with the at least one processor, to cause the apparatus 800 to carry out any one of the exemplary embodiments of the base station described above.

The memory 820 may be implemented using any suitable data storage technology, such as semiconductor-based memory devices, flash memory, magnetic memory devices and systems, optical memory devices and systems, fixed memory and removable memory. The memory may comprise a configuration database for storing configuration data.

The apparatus 800 may further comprise a communication interface 830 comprising hardware and/or software for realizing communication connectivity according to one or more wired and/or wireless communication protocols. The communication interface 830 may provide the apparatus with radio communication capabilities. The communication interface may, for example, provide a radio interface to one or more other devices. The apparatus 800 may further comprise another interface towards a core network such as a network coordinator apparatus and/or to the access nodes of a cellular communication system. The apparatus 800 may further comprise a scheduler 840 that is configured to allocate resources.

As used in this application, the term "circuitry" may refer to one or more or all of the following:
a. hardware-only circuit implementations (such as implementations in only analog and/or digital circuitry) and
b. combinations of hardware circuits and software, such as (as applicable):
   i. a combination of analog and/or digital hardware circuit(s) with software/firmware and
   ii. any portions of hardware processor(s) with software (including digital signal processor(s)), software, and memory(ies) that work together to cause an apparatus, such as a mobile phone, to perform various functions) and
c. hardware circuit(s) and or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of exemplary embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given drawings, as will be appreciated by one skilled in the art.

It will be obvious to a person skilled in the art that, as technology advances, the inventive concept may be implemented in various ways. The embodiments are not limited to the exemplary embodiments described above, but may vary within the scope of the claims. Therefore, all words and expressions should be interpreted broadly, and they are intended to illustrate, not to restrict, the exemplary embodiments.

## Claims

1. A method comprising:
measuring, by a sensor device, operational information associated with an industrial asset;
transmitting, by the sensor device, the operational information to a first gateway device via a first wireless connection;
receiving, by the first gateway device, the operational information via the first wireless connection;
transmitting, by the first gateway device, the operational information to a second gateway device via a wired connection;
receiving, by the second gateway device, the operational information via the wired connection;
transmitting, by the second gateway device, the operational information to an industrial automation device via a second wireless connection;
receiving, by the industrial automation device, the operational information via the second wireless connection.

2. A method according to claim 1, further comprising:
adjusting, by the industrial automation device, one or more control parameter settings based on the received operational information.

3. A method according to any preceding claim, further comprising transmitting, by the industrial automation device, one or more commands to the sensor device via the first gateway device and the second gateway device;
wherein the one or more commands are used to adjust a sampling rate for measuring the operational information associated with the industrial asset by the sensor device.

4. A method according to any preceding claim, wherein the wired connection comprises a power cable or a PtlOO cable, wherein the power cable is used to provide power from the industrial automation device to the industrial asset.

5. A method according to claim 4, wherein the power cable is further used to provide power from the industrial automation device to the first gateway device and to the second gateway device.

6. Equipment comprising means for implementing a method as claimed in any preceding claim.

7. A computer program comprising instructions for causing an apparatus to carry out a method as claimed in any of claims 1-5.

8. A system comprising:
at least one sensor device (101), a first gateway device (102), a second gateway device (103), and an industrial automation device (104);
wherein the sensor device (101) is configured to:
measure operational information associated with an industrial asset;
transmit the operational information to the first gateway device (102) via a first wireless connection (110);
wherein the first gateway device (102) is configured to:
receive the operational information from the sensor device (101) via the first wireless connection (110);
transmit the operational information to the second gateway device (103) via a wired connection (111);
wherein the second gateway device (103) is configured to:
receive the operational information from the first gateway device (102) via the wired connection (111);
transmit the operational information to the industrial automation device (104) via a second wireless connection (112);
wherein the industrial automation device (104) is configured to:
receive the operational information from the second gateway device (103) via the second wireless connection (112).

9. A system according to claim 8, wherein the industrial automation device (104) is further configured to adjust one or more control parameter settings based on the received operational information.

10. A system according to any of claims 8-9, wherein the industrial automation device (104) is further configured to transmit one or more commands to the sensor device (101) via the first gateway device (102) and the second gateway device (103); and
wherein the sensor device (101) is further configured to receive the one or more commands and adjust, based on the received one or more commands, a sampling rate for measuring the operational information associated with the industrial asset.

11. A system according to any of claims 8-10, wherein the wired connection (111) comprises a power cable or a PtlOO cable, wherein the power cable is used to provide power from the industrial automation device (104) to the industrial asset.

12. A system according to claim 11, wherein the power cable is further used to provide power from the industrial automation device (104) to the first gateway device (102) and to the second gateway device (103).

13. A system according to any of claims 8-12, wherein the operational information comprises measured values at least for temperature and/or vibration associated with the industrial asset.

14. A system according to any of claims 8-13, wherein the industrial asset comprises a motor, a pump, a compressor, a fan, an extruder, and/or a mounted bearing.

15. A system according to any of claims 8-14, wherein the industrial automation device (104) comprises a variable speed drive.
